(19) Europäisches Patentamt
European Patent Office
Office européen des brevets

(11) Publication number: **0 351 152 A2**

# (12) EUROPEAN PATENT APPLICATION

(21) Application number: 89306949.2

(22) Date of filing: 07.07.89

(51) Int. Cl.⁴: C08G 63/682

(30) Priority: 11.07.88 JP 172460/88

(43) Date of publication of application: 17.01.90 Bulletin 90/03

(84) Designated Contracting States: AT BE CH DE ES FR GB GR IT LI LU NL SE

(71) Applicant: POLYPLASTICS CO. LTD.
3-13, Azuchi-machi 2-chome
Chuo-Ku Osaka-shi(JP)

(72) Inventor: Kashihara, Osamu
53 Morishita
Fuji-shi Shizuoka(JP)
Inventor: Ohnuma, Hiroshi
5-8-1-807, Makiochi
Minoo-shi Osaka(JP)
Inventor: Kubota, Masaru
976-5 Hoshiyama
Fujinomiya-shi Shizuoka(JP)

(74) Representative: Jackson, Peter et al
HYDE, HEIDE & O'DONNELL 146 Buckingham Palace Road
London SW1W 9TR(GB)

## (54) Halogenated polyester resin composition.

(57) A halogenated polyester resin composition comprises a flame-retardant aromatic polyester copolymer having a halogen content of 0.5 to 30 percent by weight and having been obtained by poly-condensing:

(A) an aromatic dicarboxylic acid or an ester-forming derivative thereof,
(B) an aliphatic glycol or an ester-forming derivative thereof and
(C) a halogenated ester-forming compound, and 0.01 to 20 percent by weight of an ionomer resin.

EP 0 351 152 A2

## HALOGENATED POLYESTER RESIN COMPOSITION

The present invention relates to a halogenated polyester resin composition having excellent elongation, hue and flame retardancy.

[Prior Art]

Polyester resins are widely used as a material for automobiles, electric and electronic instruments, precision instruments, construction materials and sundries in virtue of their excellent processability, mechanical strengths and physical and chemical properties

However, they have a defect that they are flammable. To overcome this defect, various flame retardants (such as decabromodiphenyl ether and brominated polycarbonate) are used to make them flame-retardant. However, when a flame retardant is used, the mechanical properties such as impact resistance and elongation of the moldings are usually impaired and the flame-retardant oozes out on the surfaces of the moldings.

Further a process for improving the mechanical properties, particularly elongation, of the polyester resins is known. In this process, an elastomer and a plasticizer are added to the polyester resins to make them flexible. A process for increasing the degree of polymerization of the polyester resins is also known. However, the former process has a problem that the relative amount of the additives to the matrix polymer must be large and, therefore, the essential mechanical properties of the matrix polymer, are impaired, and the latter process has a problem that the production cost is high.

( Summary of the Invention )

After intensive investigations made for the purpose of making polyester resins flame-retardant while further improving the mechanical strengths of them under these circumstances, the inventors have found that when an ionomer resin is added to a halogenated polyester resin, the resin is made flame-retardant without reducing the mechanical strengths and, surprisingly, the elongation thereof is improved. The present invention has been completed on the basis of this finding.

The present invention relates to a halogenated polyester resin composition characterized by comprising a flame-retardant aromatic polyester copolymer having a halogen content of 0.5 to 30 wt. % obtained by polycondensing:

(A) mainly an aromatic dicarboxylic acid or an ester-forming derivative thereof,

(B) mainly an aliphatic glycol or an ester-forming derivative thereof, and

(C) a halogenated ester-forming compound, and 0.1 to 20 wt. %, based on the total composition, of an ionomer resin. According to the present invention, the polyester resin is made flame-retardant and its elongation and hue are improved.

The invention provides, in other words, a halogenated polyester resin composition which comprises a flame-retardant aromatic polyester copolymer having a halogen content of 0.5 to 30 percent by weight and having been obtained by poly-condensing:

(A) an aromatic dicarboxylic acid or an ester-forming derivative thereof,

(B) an aliphatic glycol or an ester-forming derivative thereof and

(C) a halogenated ester-forming compound, and 0.01 to 20 percent by weight of an ionomer resin.

It is preferred that the ionomer resin is a reaction product obtained from a copolymer of a olefinic monocarboxylic acid and a metal compound.

The compound (C) is generally preferred to be an alcohol or a carboxylic acid to form an ester with the component (A) or (B) and proportions of (A), (B) and (C) may be selected to form an ester copolymer.

Now the description will be made on the components of the aromatic polyester compolymer of the present invention. Component (A) comprises mainly an aromatic dicarboxylic acid or an ester-forming derivative thereof. Typical examples of them include terephthalic acid and its derivatives. If necessary, they can he used in combination with auxiliary dicarboxylic acids or derivative thereof such as isophthalic, naphthalenecarboxylic and naphthalenedicarboxy acids; aliphatic acids and ester-forming derivatives thereof, such as adipic, sebacic, trimellitic and succinic acids; and aromatic hydroxycarboxylic acids and ester-forming derivatives thereof, such as hydroxybenzoic and hydroxynaphthoic acids.

Component (B) constituting the polyester copolymer of the present invention mainly comprises an

aliphatic diol or an ester-forming derivative thereof. Typical examples of them include low-molecular weight glycols having 2 to 8 carbon atoms, such as diols e.g., ethylene glycol, 1,4-butylene glycol, 1,3-propanediol 1, 4-butanediol 1,6-hexanediol and 1,8-octanediol. These low-molecular weight glycols can be used in combination with high-molecular weight glycols such as polyalkylene oxide glycols, e.g., polyethylene oxide glycol. The use of such a high molecular weight glycol in combination with the low-molecular weight glycol is quite effective in improving the elongation of the aromatic polyester and making it resistant to bending. If necessary, they can be used in combination with auxiliary components such as aromatic alcohols, e.g., bisphenol A, 4,4′-dihydroxybiphenyl and phosphinic acids having an aromatic diol group; alkylene oxide adducts of alcohols such as ethylene oxide (2 mol) adduct of bisphenol A and propylene oxide (2 mol) adduct of bisphenol A; polyhydroxy compounds such as glycerol and pentaerythritol; and ester-forming derivatives of them.

The polyester copolymer of the present invention is an aromatic polyester copolymer containing halogen atom(s) in its molecule and is produced by using a halogenated ester-forming compound as the monomeric component (C). The halogenated compounds usable for this purpose include the following compounds wherein the halogen is particularly preferably bromine:

(1) 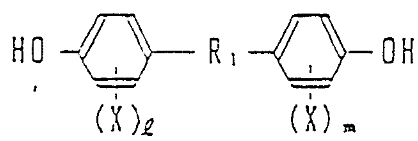

(2) 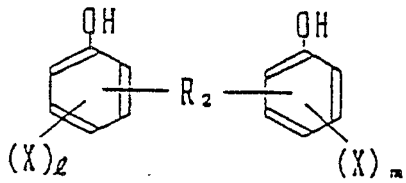

(3) 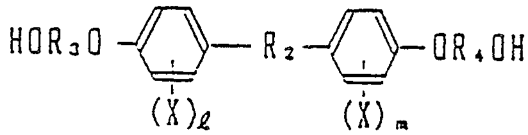

(4) 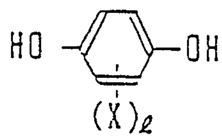

(5) 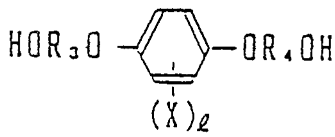

(6) 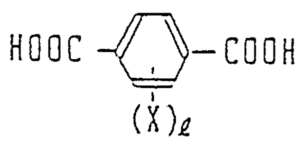

(7) 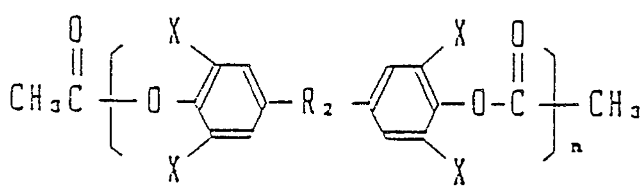

(8) 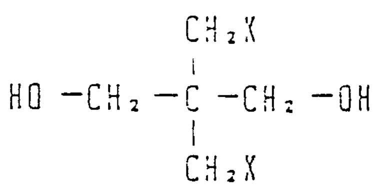

wherein
$R_1$ and $R_2$ each represent

$-CH_2-$, 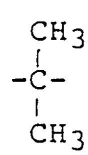 , $-O-$, $-S-$ or $-SO_2-$,

$R_3$ and $R_4$ each represent $-C_2H_4-$, $-C_3H_6-$, $-(C_2H_4O)_n-$ or $-(C_3H_6O)_n-$,
X represents a halogen, $\ell$ and $m$ each represent an integer of 1 to 4 and $n$ represents an integer of at least 1.

The halogen compounds usable as the copolymerizable compound are those of general formulae (1) to (7). When the halogen is bromine, examples of the compounds of general formula (1) include tetrabromobisphenol A and tetrabromobisphenol sulfone, those of general formula (2) include tetrabromoisphenol F, those of general formula (3) include ethylene oxide (2 mol) adduct of tetrabromobisphenol A, propylene oxide (2 mol) adduct of tetrabromobisphenol A, ethylene oxide (2 mol) adduct of tetrabromobisphenol sulfone and propylene oxide (2 mol) adduct of tetrabromobisphenol sulfone, those of general formula (4) include tetrabromohydroquinone, those of general formula (5) include ethylene oxide (2 mol) adduct of tetrabromohydroquinone, those of general formula (6) include tetrabromoterephthalic acid, and those of general formula (7) include tetrabromobisphenol A polycarbonate.

The molecular weight of the monomeric halogen compound constituting the copolymer composition is preferably at least 390. When the molecular weight is insufficiently low, the oxygen index which is a barometer of the flame retardancy cannot be improved. The monomeric halogen compound has preferably at least one aromatic ring in its molecule.

The halogen compound is used in such an amount that the halogen content of the formed copolyester will be 0.5 to 30 wt. %, preferably 2 to 20 wt. %. When the amount is less than 0.5 wt. %, no sufficient flame retardancy can be obtained and, on the contrary, when it exceeds 30 wt. %, the mechanical and physical properties of the product are impaired unfavorably.

The amount of the monomers used for producing the polyester copolymer used in the present invention is as follows: when the ester-forming functional group of the halogen compound used as component (C) is alcoholic, the total amount of components (B) and (C) is 90 to 200 mol, preferably 95 to 150 mol, for 100 mol of component (A). When the ester-forming functional group of component (C) is carboxylic, 90 to 200 mol, preferably 95 to 150 mol, of component (B) is used for 100 mol of the total of components (A) and (C).

When a high oxygen index is necessitated under the conditions of use, the halogen content of the copolymer is adjusted by suitably controlling the amount of component (C) to satisfy an intended oxygen index.

The ionomer resin used in the present invention is produced by reacting a base copolymer with a metal compound capable of ionizing the copolymer. The base copolymer comprises an α-olefin of the general formula: $RCH=CH_2$ in which R is selected from the group consisting of a hydrogen atom and alkyl groups having 1 to 8 carbon atoms, and a carboxylic acid having an α,β-ethylenically unsaturated group and one or two carboxyl groups. The base copolymer is particularly preferably an α-olefin/monocarboxylic acid copolymer.

The preferred base copolymers include, for example, ethylene/acrylic acid copolymer, ethylene/methacrylic acid copolymer, ethylene/itaconic acid copolymer, ethylene/maleic acid copolymer, ethylene/acrylic acid/methyl methacrylate copolymer, ethylene/methacrylic acid/vinyl acetate copolymer, ethylene/acrylic acid/vinyl alcohol copolymer, ethylene/propylene/acrylic acid copolymer, ethylene/styrene/acrylic acid copolymer, ethylene/methacrylic acid/acrylonitrile copolymer, ethylene/vinyl chloride/acrylic acid copolymer, ethylene/chlorotrifluoroethylene/methacrylic acid copolymer, polyethylene/acrylic acid graft copolymer and polypropylene/acrylic acid graft copolymer.

When the base copolymer is an α-olefin/monocarboxylic acid copolymer, the metal ion is preferably a monovalent to trivalent ion (such as $Na^+$, $K^+$, $Li^+$, $Zn^{2+}$ or $Ca^{2+}$).

In the present invention, an ionomer produced by reacting a formate, acetate, hydroxide, methoxide, carbonate or the like of the above-mentioned metal with the above-mentioned base copolymer can be used.

The amount of the ionomer resin to be added to the aromatic polyester copolymer is 0.1 to 20 wt. %, preferably 0.5 to 10 wt. %, based on the total composition. When the amount is less than 0.1 wt. %, no effect of improving the elongation can be obtained while when it exceeds 20 wt. %, the above-described oozing occurs in the molding step unfavorably.

When flame-retarding assistants such as metal oxides or hydroxides, e.g., antimony trioxide, antimony halides, aluminum hydroxide or magnesium hydroxide, are also used, a further improved flame retardancy can be obtained.

To obtain moldings having excellent mechanical strengths, heat resistance, dimensional stability (resistance to distortion or warp) and electric properties, it is preferred to incorporate an inorganic filler in the composition of the present invention, fibrous, powdery, granular or platy reinforcing fillers can be used depending on the purpose.

The fibrous fillers include inorganic fibers such as those of glass, asbestos, carbon, silica, silica/alumina, zirconia, boron nitride, silicon nitride, boron, potassium titanate, and metals, e.g., stainless steel, aluminum,

titanium, copper and brass. Among them, typical fibrous fillers are glass fibers and carbon fibers and glass fibers are particularly preferred. Further high-melting organic fibrous materials such as polyamide, fluororesin and acrylic resin are also usable like the inorganic fibrous fillers.

The powdery or granular fillers include carbon black; silicates such as silica, quartz powder, glass beads, glass powder, calcium silicate, aluminum silicate, kaolin, talc, clay, diatomaceous earth and wollastonite; metal oxides such as iron oxide, titanium oxide, zinc oxide and alumina; metal carbonates such as calcium carbonate and magnesium carbonate, metal sulfates such as calcium sulfate and barium sulfate; silicon carbide; silicon nitride; boron nitride; and various metal powders.

The platy fillers include, for example, mica, glass flakes and various metal foils.

These inorganic fillers may be used either solely or in combination of two or more of them. A combination of the fibrous filler such as glass fibers or carbon fibers with the granular and/or platy filler(s) is preferred in order to obtain excellent mechanical strengths, dimensional accuracy, electrical properties, etc.

If necessary, the reinforcing filler is preferably used in combination with a binder or a surfactant. The binders and surfactants include, for example, functional compounds such as epoxy, isocyanate, silane and titanate compounds. These compounds can be used previously in a surface treatment or binding treatment or they can be incorporated therein in the step of preparation of the material. The amount of the reinforcing filler used is 50 wt. % or less, preferably 5 to 35 wt. %, based on the total composition.

The composition of the present invention may further contain one or more known additives such as lubricant, nucleating agent, releasing agent, antistatic agent, another surfactant, plasticizer, pigment, dye, thermal stabilizer and ultraviolet stabilizer in order to obtain desired properties suitable for the use.

In addition, a small amount of one or more auxiliary organic polymeric substances may he incorporated in or copolymerized with the composition of the present invention in order to obtain desired properties. They include, for example, vinyl compounds and copolymers thereof such as polyethylene terephthalate, polycarbonate, low-molecular polyethylene, polypropylene, polyurethane, fluororesin, ethylene/vinyl acetate copolymer, ethylene/alkyl acrylate copolymer, styrene/butadiene/acrylonitrile copolymer and styrene/acrylonitrile copolymer; as well as thermoplastic segment-type polyesters (these copolymers include also graft copolymers).

The polyester resin composition of the present invention can be produced by an ordinary process with an ordinary apparatus used for the production of synthetic resin compositions. Namely, the starting materials are kneaded with a single- or double-screw extruder and the mixture is extruded to form pellets for molding. Part of the necessary components are used as a master batch to be mixed and molded or, alternatively, part or the whole of the resin components are finely pulverized in order to facilitate the dispersion and mixing of them and then they are mixed and melt-extruded.

[Examples]

The following Examples and Comparative Examples will further illustrate the present invention, which by no means limit the invention.

Brominated polybutylene terephthalate and polybutylene terephthalate used in the following Examples and Comparative Examples were produced as follows.

Production Example 1

(production of brominated polybutylene terephthalate)

970 parts by weight of dimethyl terephthalate, 513 parts by weight of 1,4-butanediol, 158 parts by weight of ethylene oxide (2 mol)/tetrabromobisphenol

A adduct and 0.7 part by weight of tetrabutoxytitanium were placed in a reactor provided with a stirrer, nitrogen inlet tube and distillate outlet tube and the mixture was stirred at 160 °C in a nitrogen stream for 30 min. The temperature was slowly elevated and the stirring was continued at 200 to 270 °C for additional 2 h. The introduction of nitrogen was stopped and the pressure in the reactor was slowly reduced in such a manner that it reached 0.3 mmHg after 30 min. The stirring was continued under this pressure for 1 h. The polymer thus obtained had an intrinsic viscosity of 0.75 and a bromine content of 6.5 wt. %.

Production Example 2

(production of polybutylene terephthalate)

The same procedure as that of Production Example 1 was repeated except that 970 parts by weight of dimethyl terephthalate, 513 parts by weight of 1,4-butanediol and 0.7 part by weight of tetrabutoxytitanium were used. The obtained polymer had an intrinsic viscosity of 0.75.

Examples 1 to 7

Ionomer (1) (Himilan 1554; a product of Mitsui Du Pont Chemical Co., Ltd.) and Ionomer (2) (Himilan 1855; a product of Mitsui Du Pont Chemical) comprising, as the base polymer, a polymer prepared by crosslinking the molecules of ethylene/methacrylic acid copolymer with $Zn^{2+}$ ion was added in an amount shown in Table 1 to the brominated polybutylene terephthalate produced in Production Example 1. The mixture was melt-kneaded with an extruder. Then intended moldings were prepared by injection molding. The elongation and impact strength (ASTM D 638 and ASTM D 256) and hue (JIS Z 8722) of the moldings were examined. The flame retardancy was determined according to the method of UL-94V. The results were evaluated on the basis of the following criteria:
O : extinguished within 30 sec, and
X : not extinguished within 30 sec.

Comparative Examples 1 to 5

The same procedure as that of Example 1 was repeated except that ionomer resin-free brominated polybutylene terephthalate was used in Comparative Example 1, polybutylene terephthalate produced in Production Example 2 was used in Comparative Example 2, and Ionomer (1) was added to polybutylene terephthalate in Comparative Example 3. In Comparative Examples 4 and 5, Ionomer resin (1) was added to a mixture of polybutylene terephthalate with decabromo diphenyl ether and brominated polycarbonate, respectively, as the flame-retarding additive. The results are shown in Table 1.

Example 8 and Comparative Example 6

The same procedure as that of Example 1 was repeated except that a composition comprising 100 parts by weight of the same resin composition as that used in Example 3 and 30 parts by weight of glass fibers were used. The results are shown in Table 1.

In Comparative Example 6, the same procedure as that of Example 1 was repeated except that the same composition as that of Example 8 but free of the ionomer resin was used. The results are shown in Table 1.

Table 1

| | | Example 1 | Example 2 | Example 3 | Example 4 | Example 5 | Example 6 | Example 7 | Example 8 |
|---|---|---|---|---|---|---|---|---|---|
| Brominated polybutylene terephthalate (wt. %) | | 99.5 | 99 | 95 | 90 | 99.5 | 99 | 90 | 95 |
| Polybutylene terephthalate (wt. %) | | — | — | — | — | — | — | — | — |
| Ionomer resin (wt. %) | (1) | 0.5 | 1 | 5 | 10 | — | — | — | 5 |
| | (2) | — | — | — | — | 0.5 | 1 | 10 | — |
| Additive (wt.%) | decabromodiphenyl ether | — | — | — | — | — | — | — | — |
| | brominated polycarbonate | — | — | — | — | — | — | — | — |
| Inorganic filler | | — | — | — | — | — | — | — | 30 pts. by wt. of glass fibers (for 100 pts. by wt. of polymer) |
| Tensile strength ($kg/cm^2$) | | 590 | 570 | 520 | 480 | 590 | 570 | 470 | 1450 |
| Elongation (%) | | 300 | 300 | 300 | 250 | 250 | 250 | 250 | 2.5 |
| Izod impact strength (without notch) ($kg/cm^2$) | | 150 or higher | 150 or higher | 150 or higher | 150 or higher | 150 or higher | 150 or higher | 150 or higher | 60 |
| Flame retardancy | | ○ | ○ | ○ | ○ | ○ | ○ | ○ | ○ |
| Hue | L | 75.9 | 78.5 | 81.4 | 82.5 | 78.6 | 77.9 | 84.6 | 83.0 |
| | a | 4.1 | 3.2 | 2.6 | 2.2 | 3.5 | 3.8 | 1.7 | -3.0 |
| | b | 14.0 | 13.4 | 12.3 | 11.2 | 14.0 | 13.5 | 10.0 | 7.8 |

Table 1 (continued)

| | | | Comparative Example | | | | | |
|---|---|---|---|---|---|---|---|---|
| | | | 1 | 2 | 3 | 4 | 5 | 6 |
| Brominated polybutylene terephthalate (wt. %) | | | 100 | — | — | — | — | 100 |
| Polybutylene terephthalate (wt. %) | | | — | 100 | 90 | 80 | 80 | — |
| Ionomer resin (wt. %) | | (1) | — | — | 10 | 10 | 10 | — |
| | | (2) | — | — | — | — | — | — |
| Additive (wt.%) | decabromodiphenyl ether | | — | — | — | 10 | — | — |
| | brominated polycarbonate | | — | — | — | — | 10 | — |
| Inorganic filler | | | — | — | — | — | — | 30 pts. by wt. of glass fibers (for 100 pts. by wt. of polymer) |
| Tensile strength ($kg/cm^2$) | | | 470 | 560 | 480 | 500 | 470 | 1350 |
| Elongation (%) | | | 150 | 200 | 40 | 25 | 25 | 1.5 |
| Izod impact strength (without notch) ($kg/cm^2$) | | | 110 | 140 | 125 | 140 | 60 | 46 |
| Flame retardancy | | | ○ | × | × | ○ | ○ | ○ |
| Hue | | L | 72.1 | 91.7 | 92.2 | 77.3 | 74.1 | 78.5 |
| | | a | 6.1 | -0.5 | -0.4 | 2.1 | 2.0 | 2.2 |
| | | b | 15.4 | 3.9 | 2.9 | 11.0 | 9.5 | 8.8 |

It is apparent from the results of the foregoing Examples and Comparative Examples that the elongation and impact strength of the modified halogenated polyester resin of the present invention are quite improved and the hue thereof is also improved and whitened, while the flame retardancy and other physical properties of them are not impaired.

The improved halogenated resin composition of the present invention having the above-described characteristics is suitable for use as a starting material for automobiles, electric and electronic instruments, precision instruments, construction materials and sundries.

## Claims

1. A halogenated polyester resin composition which comprises a flame-retardant aromatic polyester copolymer having a halogen content of 0.5 to 30 percent by weight and having been obtained by poly-condensing;

(A) an aromatic dicarboxylic acid or an ester-forming derivative thereof,

(B) an aliphatic glycol or an ester-forming derivative thereof and

(C) a halogenated ester-forming compound, and 0.01 to 20 percent by weight of an ionomer resin.

2. A composition as claimed in claim 1, in which the halogen in the polyester is bromine.

3. A composition as claimed in claim 1 or claim 2, in which the halogenated ester-forming compound (C) has a molecular weight of 390 or above.

4. A composition as claimed in any preceding claim, in which the halogen content of the polyester copolymer is 2 to 20 percent by weight.

5. A composition as claimed in any preceding claim, in which the component (C) has an alcoholic ester-forming functional group and the total amount of components (B) and (C) is 90 to 200 mol per 100 mol of component (A).

6. A composition as claimed in any one of of claims 1 to 4, in which the component (C) has a carboxylic ester-forming functional group and the amount of component (B) is 90 to 200 mol per 100 mol of the total amount of components (A) and (C).

7. A composition as claimed in any preceding claim, in which the ionomer resin is a reaction product obtained from a copolymer of an olefinic monocarboxylic acid and a metal compound.

8. A composition as claimed in any preceding claim, in which the amount of the ionomer resin is 0.5 to 10 percent by weight of the total composition.

9. A composition as claimed in any preceding claim, which further comprises an inorganic filler in an amount up to 50 percent by weight based on the total composition.

10. A composition as claimed in claim 9, in which the amount of the inorganic filler is 5 to 35 percent by weight based on the total composition.